# FASCICULE DE BREVET EUROPEEN

(11) **EP 2 220 776 B1**
(45) Date de publication et mention de la délivrance du brevet: **30.09.2015**
(21) Numéro de dépôt: 08859733.1
(22) Date de dépôt: 08.12.2008
(51) Int. Cl.: H04B 1/40, H04B 7/185

(54) **RÉCEPTEUR DE TÉLÉCOMMANDE EN MODULATION DE FRÉQUENCE ET DE PHASE POUR SATELLITE GÉOSTATIONNAIRE**
FREQUENZ- UND PHASENMODULATIONSFERNSTEUERUNGSEMPFÄNGER FÜR GEOSTATIONÄREN SATELLIT
FREQUENCY- AND PHASE-MODULATION TELECONTROL RECEIVER FOR GEOSTATIONARY SATELLITE

(30) Priorité: 11.12.2007 FR 0708624
(43) Date de publication de la demande: 25.08.2010
(73) Titulaire: THALES, 92200 Neuilly-sur-Seine (FR)
(72) Inventeur: POPULUS, Thierry, F-31470 Fontenilles (FR); NASTA, Rodolphe, F-31100 Toulouse (FR)
(74) Mandataire: Esselin, Sophie
(86) Numéro de dépôt international: PCT/EP2008/067038
(87) Numéro de publication internationale: WO 2009/074542

(56) Documents cités:
- FR-A- 2 820 567
- US-A- 3 209 271
- WINTON A ET AL: "THE TRANSPONDER - A KEY ELEMENT IN ESA SPACECRAFT TTC SYSTEMS" ESA BULLETIN, ESA SCIENTIFIC AND PUBLICATIONS BRANCH, NOORDWIJK, NL, no. 86, 1 mai 1996 (1996-05-01), pages 72-79, XP000598011 ISSN: 0376-4265
- "Satellites Earth Stations and Systems (SES); Radio Frequency and Modulation Standard for Telemetry, Command and Ranging (TCR) of Geostationary Communications Satellites; Draft ETSI EN 301 926" ETSI STANDARDS, LIS, SOPHIA ANTIPOLIS CEDEX, FRANCE, vol. SES-ECSS, no. V1.1.1, 1 septembre 2001 (2001-09-01), XP014023210 ISSN: 0000-0001

## Description

La présente invention se rapporte à un récepteur de télécommande en modulation de fréquence et de phase (PM/FM) pour un satellite géostationnaire.

La mise à poste (ou placement à son altitude de service) d'un satellite géostationnaire requiert une aptitude du récepteur de télécommande à capturer le signal montant sur une large dynamique en fréquence (à cause des effets Doppler parasites). Cette aptitude devient un inconvénient en maintien à poste, particulièrement dans le cas de satellites co-localisés qui requièrent une bande la plus étroite possible, afin de juxtaposer les multiples bandes de réception de télécommande sans pénaliser la bande allouée pour les besoins de la charge utile du satellite.

La solution généralement utilisée d'un sous-système unique pour la mise à poste et le maintien à poste, pénalise la bande allouée à la mission télécommunications de la charge utile. Ceci peut devenir rédhibitoire en cas de co-localisation.

La solution connue pour faire face à cet inconvénient est la duplication en deux sous-systèmes distincts de télécommande, l'un de mise à poste, l'autre de maintien à poste. Cette solution est pénalisante en termes de masse et de coût.

On connait un récepteur de télécommande ou un circuit PLL d'après les documents suivants :
- Winton et al : « The transponder- a key element in ESA spacecraft TTC systems", ESA Bulletin, ESA Scientific and publications branch, Noordwijk, NL, N° 86, 1 Mai 1996 (1996-05-01), pages 72-79, XP000598011 ISSN: 0376-4265
- "Satellites Earth Stations and Systems (SES); Radio Frequency and Modulation Standard for Telemetry, Command and Ranging (TCR) of Geostationary Communications Satellites; Draft ETSI EN 301 926" ETSI Standards, LIS, Sophia Antipolis Cedex France, vol SES-ECCS, N° V1.1.1, 1Sept 2001 (2001-09-01), XP014023210 ISSN: 0000-0001
- FR-A- 2 820 567 (CIT Alcatel)
- US-A- 3 209 271 (Smith Sydney E)

Cependant, aucun de ces documents ne prévoit de réaliser un récepteur de télécommande en modulation de fréquence et de phase pour un satellite géostationnaire qui soit plus léger et moins onéreux que les récepteurs habituels, tout en ne dégradant pas la bande passante des équipements de télécommunication faisant partie de sa charge utile, quelle que soit la phase d'utilisation de ce récepteur (mise à poste ou maintien à poste).

La présente invention a pour objet un récepteur de télécommande en modulation de fréquence et de phase pour un satellite géostationnaire qui soit le plus léger et le moins onéreux possible, tout en ne dégradant pas la bande passante des équipements de télécommunication de sa charge utile.

Le récepteur conforme à l'invention est du type comprenant un circuit d'entrée analogique amplificateur hétérodyne et de filtrage (28) suivi d'un circuit de traitement numérique (29, 49) configurable en dispositif de démodulation FM ou en dispositif de démodulation PM, le circuit d'entrée analogique étant commun aux deux modes de démodulation, et il est caractérisé en ce que le circuit de traitement numérique comporte une boucle (36 à 38) de verrouillage comprenant des fonctions commutables (40, 42) selon une configuration de boucle de démodulation PM ou FM ainsi qu'un filtre (41) commandé par un signal de télécommande (45) de façon à en faire basculer la fréquence de coupure entre deux valeurs correspondant soit à la limitation de bande FM, soit à la limitation de bande PM.

Ainsi, l'invention consiste à regrouper dans un même récepteur de télécommande les fonctionnalités permettant d'assurer la mise à poste et le maintien à poste avec des performances optimales.

La présente invention sera mieux comprise à la lecture de la description détaillée d'un mode de réalisation, pris à titre d'exemple non limitatif et illustré par le dessin annexé, sur lequel :
- la figure 1 est un bloc-diagramme d'un récepteur de télécommande conforme à l'invention montrant, dans sa partie gauche des récepteurs PM et FM de l'art antérieur, et dans sa partie droite un récepteur conforme à l'invention, et
- la figure 2 est un bloc-diagramme d'une variante du récepteur de télécommande de l'invention.

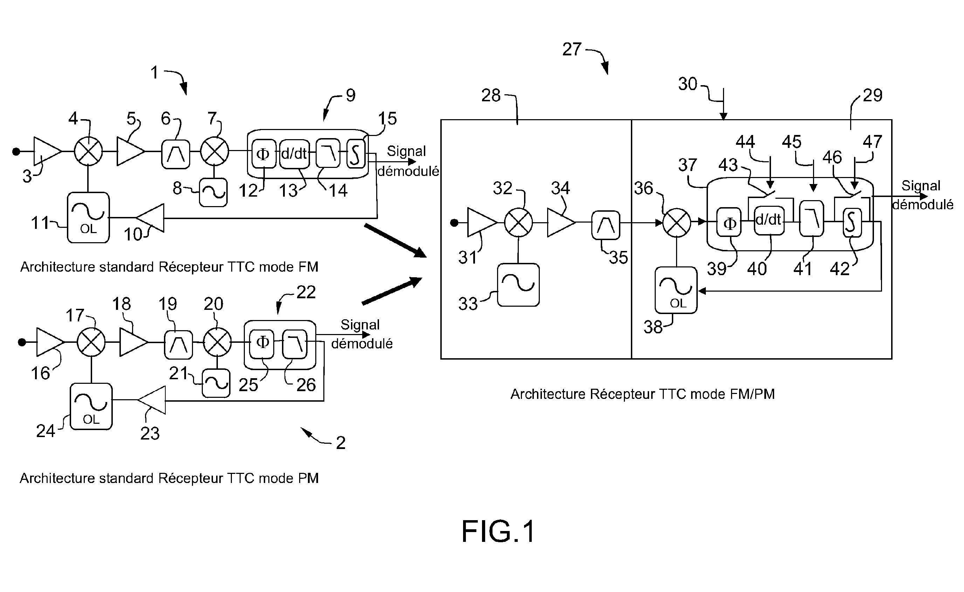

En haut de la partie de gauche de la figure 1 du dessin, on a représenté un récepteur 1 de télécommande en mode FM à architecture standard pour satellite, et en bas de cette partie gauche, on a représenté un récepteur 2 de télécommande en mode PM à architecture standard pour le même satellite.

Le récepteur 1 comporte essentiellement : un circuit d'amplification d'entrée 3 relié à une première entrée d'un comparateur de phase 4 inclus dans une boucle de verrouillage de fréquence comprenant, dans l'ordre, un amplificateur 5 relié à la sortie du comparateur 4, un filtre passe-bande 6 de limitation de bande FM, un mélangeur 7 relié par ailleurs à un oscillateur local 8, un circuit FM 9 et un amplificateur 10 dont la sortie est reliée à l'entrée de commande en tension d'un oscillateur 11 dont la sortie est reliée à une seconde entrée du comparateur 4. Le circuit 9 comprend un détecteur de phase 12, un dérivateur 13, un filtre passe-bas 14 et un intégrateur 15.

Le récepteur 2 comporte essentiellement : un circuit d'amplification d'entrée 16 relié à une première entrée d'un comparateur des phase 17 inclus dans une boucle de verrouillage de phase comprenant, dans l'ordre, un amplificateur 18 relié à la sortie du comparateur 17, un filtre passe-bande 19 de limitation de bande PM, un mélangeur 20 relié par ailleurs à un oscillateur local 21, un circuit PM 22, et un amplificateur 23 dont la sortie est reliée à l'entrée de commande en tension d'un oscillateur 24 dont la sortie est reliée à une seconde entrée du comparateur 14. Le circuit 22 comprend un détecteur de phase 25 et un filtre passe-bas 26.

A la partie de droite du dessin, on a schématisé un récepteur de télécommande 27 conforme à l'invention. Ce récepteur comporte essentiellement un bloc 28 de circuits d'entrée analogiques constituant un circuit amplificateur hétérodyne et de filtrage et un bloc 29 de circuits configurables soit en mode PM soit en mode FM sous la commande d'un signal 30 de commande de configuration, lui-même provenant d'un signal de télécommande approprié envoyé depuis la station de pilotage du satellite.

Le bloc de circuits d'entrée analogiques 28 comporte, dans l'ordre, depuis son entrée, un circuit d'amplification 31, un mélangeur 32 relié à un oscillateur local 33, un amplificateur 34 et un filtre passe-bande 35.

Le bloc de circuits numériques 29 comporte essentiellement une boucle configurable en boucle de phase ou en boucle de fréquence sous la commande du signal 30. Cette boucle configurable comprend un comparateur de phase 36 suivi d'un circuit de démodulation et de limitation de bande 37 et d'un oscillateur local 38 commandé par le signal de sortie du circuit 37 et dont la sortie est reliée au comparateur 36. Le circuit 37 comporte, dans le présent exemple, en cascade, un détecteur de phase 39, un dérivateur 40, un filtre passe-bas commandé 41 et un intégrateur 42. Un commutateur 43 commandé par un signal 44 est branché en parallèle sur le dérivateur 40. Le filtre 41 est commandé par un signal 45 de façon à en faire basculer la fréquence de coupure entre deux valeurs correspondant soit à la limitation de bande FM, soit à la limitation de bande PM. Un commutateur 46, commandé par un signal 47 est branché en parallèle sur l'intégrateur 42. Les trois signaux 44, 45 et 47 sont contenus dans le signal de télécommande 30, lui-même multiplexé dans le signal de télécommande général reçu par le satellite dont les autres composantes sont les signaux de télécommande habituels. Le bloc 29 est avantageusement réalisé sous forme d'un circuit intégré de traitement numérique.

Ainsi, lorsque les commutateurs 43 et 46 sont ouverts et que la fréquence de coupure du filtre 45 est forcée à une valeur correspondant à la limitation FM, le récepteur de l'invention 27 (composé des blocs 28 et 29) se comporte comme le récepteur classique 1, fonctionnant en mode FM, c'est-à-dire en démodulation FM répondant au standard de modulation utilisé en mise à poste et assurant une large capture en fréquence.

Lorsque les commutateurs 43 et 46 sont fermés et que la fréquence de coupure du filtre 45 est forcée à une valeur correspondant à la limitation PM, le récepteur 27 se comporte comme le récepteur classique 2 en mode PM, c'est-à-dire en démodulation PM répondant à un besoin de maintien à poste et assurant une forte réjection des signaux adjacents.

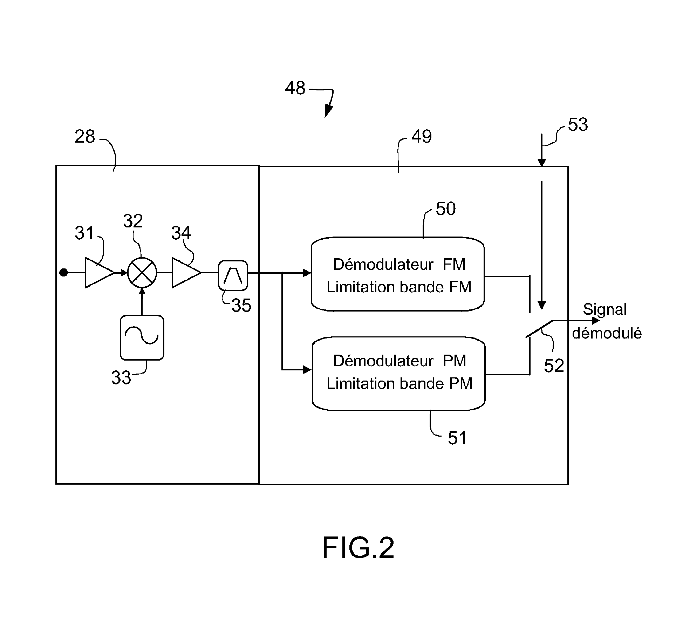

La variante de réalisation du récepteur de l'invention schématisée en figure 2 comporte un circuit analogique 28 identique à celui de la figure 1, suivi d'un circuit de traitement numérique 49 dont l'entrée est reliée à la sortie du filtre 35. Ce circuit 49 comprend un circuit 50 démodulateur et limiteur de bande pour le mode FM, un circuit 51 démodulateur et limiteur de bande pour le mode PM, et un commutateur commandé 52 permettant de sélectionner soit le circuit 50 soit le circuit 51. Dans l'exemple représenté sur le dessin, le commutateur 52 est en aval des circuits 50 et 51, mais il peut également être disposé en amont de ces circuits, et dans ce dernier cas, un circuit « OU » reliant alors les sorties de ces deux circuits à la sortie du circuit 49. Ce commutateur est commandé par un signal de télécommande 53 multiplexé, comme le signal 30, dans le signal de télécommande général reçu par le satellite. Ce commutateur active l'un des deux dispositifs démodulateurs et limiteurs de bande (50 ou 51). Les fonctions de démodulation et de limitation de bande des circuits 50 et 51 sont les mêmes que celles obtenues dans le bloc 29 lorsque les commutateurs sont respectivement ouverts et fermés.

Dans l'architecture modulaire du récepteur de l'invention, la chaîne analogique est commune aux deux modes PM et FM, ce qui n'est pas le cas des architectures de récepteurs de télécommande habituelles, dans lesquels le filtrage sélectif est assuré par un filtre analogique dédié PM ou FM. De plus les boucles de contre-réaction de l'oscillateur local (OL) ont des caractéristiques différentes d'un mode à l'autre. Le regroupement des deux modes dans un même équipement de l'art antérieur n'est donc pas envisageable. Dans l'architecture de l'invention, le filtrage sélectif est assuré par le démodulateur numérique.

Par rapport aux récepteurs classiques doubles PM /FM (tels que ceux représentés à la partie gauche du dessin), le récepteur de l'invention présente l'avantage d'une réduction dans un rapport d'environ 2 du coût et de la masse du sous-système de télécommande.

On a décrit ci-dessus, pour le mode de mise en oeuvre préféré de l'invention un basculement en FM lors de la phase de mise à poste et un basculement en PM lors du maintien à poste. Toutefois, lors du maintien à poste, il est possible de basculer en mode FM dans des cas particuliers, par exemple en mode de secours.

## Revendications

1. Récepteur de télécommande en modulation de fréquence et de phase pour un satellite géostationnaire, du type comprenant un circuit d'entrée analogique amplificateur hétérodyne et de filtrage (28) suivi d'un circuit de traitement numérique (29, 49) configurable en dispositif de démodulation FM ou en dispositif de démodulation PM, le circuit d'entrée analogique étant commun aux deux modes de démodulation, **caractérisé en ce que** le circuit de traitement numérique comporte une boucle (36 à 38) de verrouillage comprenant des fonctions commutables (40, 42) selon une configuration de boucle de démodulation PM ou FM ainsi qu'un filtre (41) commandé par un signal de télécommande (45) de façon à en faire basculer la fréquence de coupure entre deux valeurs correspondant soit à la limitation de bande FM, soit à la limitation de bande PM.

2. Récepteur de télécommande selon la revendication 1, **caractérisé en ce que** les fonctions commutables sont un dérivateur (40) et un intégrateur (42).

3. Récepteur de télécommande selon la revendication 1, **caractérisé en ce que** le circuit de traitement numérique comporte un dispositif (50) démodulateur et limiteur de bande FM, un dispositif (51) démodulateur et limiteur de bande PM et un commutateur (52) commandé par ledit signal de télécommande et activant l'un de ces deux dispositifs démodulateurs et limiteurs de bande.

4. Récepteur de télécommande selon l'une des revendications précédentes, **caractérisé en ce que** le circuit d'entrée analogique comprend un circuit d'hétérodynage (32, 33) et un filtre passe-bande (35).

## Patentansprüche

1. Fernsteuerungsempfänger mit Frequenz- und Phasenmodulation für einen geostationären Satelliten des Typs, der eine Heterodyn-Verstärker- und Filterungs-Analogeingangsschaltung (28) gefolgt von einer digitalen Verarbeitungsschaltung (29, 49) umfasst, der als FM-Demodulationsvorrichtung oder als PM-Demodulationsvorrichtung konfiguriert werden kann, wobei die Analogeingangsschaltung zwei Demodulationsmodi gemeinsam ist, **dadurch gekennzeichnet, dass** die digitale Verarbeitungsschaltung eine Verriegelungsschleife (36 bis 38) umfasst, die schaltbare Funktionen (40, 42) gemäß einer PM- oder FM-Demodulationsschleifenkonfiguration sowie ein Filter (41) umfasst, das von einem Fernsteuersignal (45) gesteuert werden kann, um die Grenzfrequenz zwischen zwei Werten umzuschalten, die entweder der FM-Bandbegrenzung oder der PM-Bandbegrenzung entsprechen.

2. Fernsteuerungsempfänger nach Anspruch 1, **dadurch gekennzeichnet, dass** die schaltbaren Funktionen ein Differenzierer (40) und ein Integrator (42) sind.

3. Fernsteuerungsempfänger nach Anspruch 1, **dadurch gekennzeichnet, dass** die digitale Verarbeitungsschaltung eine FM-Band-Demodulations- und-Begrenzungsvorrichtung (50), eine PM-Band-Demodulations- und-Begrenzungsvorrichtung (51) und einen Schalter (52) umfasst, der von dem Fernsteuersignal gesteuert wird und eine dieser beiden Demodulations- und Bandbegrenzungsvoruchtungen aktiviert.

4. Fernsteuerungsempfänger nach einem der vorherigen Ansprüche, **dadurch gekennzeichnet, dass** die Analogeingangsschaltung eine Heterodyn-Schaltung (32, 33) und ein Bandpassfilter (35) umfasst.

## Claims

1. A frequency and phase modulation remote control receiver for a geostationary satellite, of the type comprising a heterodyne amplifying and filtering analog input circuit (28) followed by a digital processing circuit (29, 49) that can be configured as an FM demodulation device or as a PM demodulation device, said analog input circuit being common to both demodulation modes, **characterised in that** said digital processing circuit comprises a locking loop (36 to 38) comprising functions (40, 42) that can be switched according to a PM or FM demodulation loop configuration, as well as a filter (41) controlled by a remote control signal (45) so as to toggle the cut-off frequency between two values that correspond to either the FM band limitation or to the PM band limitation.

2. The remote control receiver according to claim 1, **characterised in that** the switchable functions are a differentiator (40) and an integrator (42).

3. The remote control receiver according to claim 1, **characterised in that** said digital processing circuit comprises an FM demodulator and band limiter device (50), a PM demodulator and band limiter device (51) and a switch (52) controlled by said remote control signal and activating one of said two demodulator and band limiter devices.

4. The remote control receiver according to any one of the preceding claims, **characterised in that** said analog input circuit comprises a heterodyning circuit (32, 33) and a band-pass filter (35).
